# EUROPÄISCHE PATENTSCHRIFT

(11) **EP 0 693 308 B1**
(45) Veröffentlichungstag und Bekanntmachung des Hinweises auf die Patenterteilung: **25.04.2001**
(21) Anmeldenummer: 95108990.3
(22) Anmeldetag: 10.06.1995
(51) Int. Cl.: B01D 53/02, B01D 53/70, B01J 20/26

(54) **Verwendung eines Festbetts und Verfahren zur Rückhaltung von Polychlordibenzodioxinen und Polychlordibenzofuranen**
Use of a fixed bed and process for retaining polychlorodibenzodioxines and polychlorodibenzofuranes
Application d'un lit fixe et procédé pour retenir des polychlorodibenzodioxines et des polychlorodibenzofuranes

(30) Priorität: 20.07.1994 DE 4425658
(43) Veröffentlichungstag der Anmeldung: 24.01.1996
(73) Patentinhaber: Forschungszentrum Karlsruhe GmbH, 76133 Karlsruhe (DE)
(72) Erfinder: Kreisz, Siegfried, Dr., D-76187 Karlsruhe (DE); Hunsinger, Hans, D-76356 Weingarten (DE); Gerig, Andreas, D-76185 Karlsruhe (DE); Häfele, Gerhard, D-75053 Gondelsheim (DE)
(74) Vertreter: Rückert, Friedrich, Dr.

(56) Entgegenhaltungen:
- EP-A- 0 230 875
- EP-A- 0 388 140
- EP-A- 0 479 286
- EP-A- 0 479 350
- DE-A- 2 642 241
- DE-A- 4 126 944
- US-A- 3 629 998

## Beschreibung

Die Erfindung betrifft die Verwendung eines Festbetts gemäß Anspruch 1 und ein Verfahren zur Rückhaltung von Polychlordibenzodioxinen (PCDD) und Polychlordibenzofuranen (PCDF) gemäß dem Oberbegriff von Anspruch 3.

Von den polyhalogenierten Verbindungen in Rauchgasen von Verbrennungsanlagen, insbesondere von Abfallverbrennungsanlagen, sind wegen ihrer Toxizität hauptsächlich Polychlordibenzodioxine (PCDD) und Polychlordibenzofurane (PCDF) von grundlegender Bedeutung. Andere polyhalogenierte Verbindungen und die entsprechenden bromierten Verbindungen spielen eine geringere Rolle.

Bei heutigen Abfallverbrennungsanlagen treten im Rohgas beim Austritt aus dem Kessel PCDD/F-Konzentrationen bis zu 5 ng/Nm³ TEQ (TEQ: Toxizitätsäquivalent) auf. Für die Emission gilt nach der 17. BImSchV. ein Grenzwert von 0,1 ng/Nm³ TEQ. Dieser Grenzwert muß durch technische Minderungsmaßnahmen in der Abgasreinigungsanlage sicher eingehalten werden.

Ein Verfahren der eingangs genannten Art ist aus der Veröffentlichung Thomas Löser: Einsatz von Aktivkohlen zur PCDD/F-Minderung, AbfallwirtschaftsJournal 4 (1992), Nr. 11, 893 - 902, bekannt. In der Veröffentlichung wird die Meinung vertreten, die sichere Einhaltung der mit der 17. BImSchV geforderten Emissionskonzentration besonders für Quecksilber und die chlororganischen Verbindungen sei nur durch den Einsatz von Aktivkohlen in der Rauchgasnachreinigung zu erreichen. Der Autor berichtet über Untersuchungen zur Rückhaltung von PCDD/F an einem Festbettfilter aus Herdofenkoks. Die erzielten Abscheidegrade liegen zwischen 88,5 und 97,9 %; der geforderte Grenzwert konnte eingehalten werden. Der Herdofenkoks soll nach seiner Beladung verbrannt werden.

Auch aus der EP-A-0 479 350 geht ein Verfahren zur Abtrennung von Dioxinen aus Verbrennungsabgasen hervor, bei dem als Adsorptionsmittel Aktivkohle, hier jedoch vermischt mit Additiven wie Flugasche oder anorganischen Verbindungen verwendet wird.

In der Veröffentlichung Hansjörg Regler: Quecksilber- und Dioxin/Furan-Abscheideverhalten mit einer trockenen Rauchgasreinigung unter Zugabe von Herdofenkoks, AbfallwirtschaftsJournal 2 (1990), Nr. 12, 810 - 817 wird die Eignung von Herdofenkoks, gelöschtem Kalk und einer Mischung von 3 % Aktivkohle mit Weißkalk (Ca(OH)₂) mit dem Handelsnamen "Sorbalit" als Adsorptionsmittel für Dioxine und Furane untersucht. Die Grenzwerte können mit gelöschtem Kalk nicht eingehalten werden, während die beiden anderen Adsorptionsmittel zufriedenstellende Ergebnisse liefern.

Über weitere Versuche mit den genannten Adsorptionsmitteln zur Rückhaltung von Dioxinen und Furanen wird in der Veröffentlichung Jürgen Gottschalk: Flugstromverfahren - ein Verfahren der Kohlenstoffadsorptionstechnik zur Minimierung der Restemission, AbfallwirtschaftsJournal 4 (1992), Nr. 12, 997 - 1001 und AbfallwirtschaftsJournal 5 (1993). Nr. 1 78 - 82 berichtet.

Wie erwartet, adsorbieren kohlenstoffhaltige Adsorptionsmittel auch Quecksilber (vgl. H. Braun, M. Metzger und H. Vogg: Zur Problematik der Quecksilberabscheidung aus Rauchgasen von Müllverbrennungsanlagen, Müll und Abfall 2/86, 62 - 71). Hieraus ergeben sich Probleme bei der Weiterbehandlung der beladenen Adsorptionsmittel. Beim Verbrennen der beladenen, kohlenstoffhaltigen Adsorptionsmittel werden zwar die Dioxine und Furane zerstört, nicht dagegen Quecksilber, das sich im Verlauf des Zyklus Abscheiden-Verbrennen anreichert. Beim Betrieb von kohlenstoffhaltigen Adsorptionsmitteln besteht bei einem Falschlufteinbruch außerdem die Gefahr eines Brandes.

Aus der US-A-3 629 998 ist die Verwendung von Polyethylen zur Rückhaltung von Tetrachlorkohlenstoff (CCl₄) bekannt. Ein Hinweis auf die Rauchgasreinigung findet sich hier jedoch nicht.

Der Erfindung liegt die Aufgabe zugrunde, ein Material für ein Festbett zur Rückhaltung von polyhalogenierten Verbindungen und ein Verfahren zur Rückhaltung von Polychlordibenzodioxinen (PCDD) und Polychlordibenzofurane (PCDF) der eingangs genannten Art vorzuschlagen, das zwar die polyhalogenierten Verbindungen, nicht jedoch Quecksilber abscheidet, und bei dem die Gefahr eines Brandes ausgeschlossen ist. Die Aufgabe wird erfindungsgemäß durch die Verwendung gemäß Anspruch 1 und durch die in Anspruch 3 gekennzeichnete Maßnahmen gelöst. Die abhängigen Ansprüche geben bevorzugte Ausgestaltungen der Verwendung und des Verfahrens an.

Überraschenderweise hat sich gezeigt, daß PCDD und PCDF wirksam durch Polyolefine adsorbiert werden. Als besonders wirksam zeigten sich Polyethylen und Polypropylen. Die in den eingangs zitierten Veröffentlichungen beschriebenen Verfahren lassen sich daher mit einem Festbett aus einem Polyolefin durchführen.

Zur wirksamen Rückhaltung von polyhalogenierten Verbindungen soll das erfindungsgemäße Adsorptionsmittel auf einer Temperatur von 40 bis 100 °C, vorzugsweise von 60 bis 80 °C gehalten werden.

Das Polyolefin wird vorzugsweise in körniger Form mit einer möglichst großen spezifischen Oberfläche eingesetzt, obwohl es sich gezeigt hat, daß auch Rohre aus einem Polyolefin, gegebenenfalls mit Einbauten wie Prallwänden etc., beträchtliche Mengen an Dioxinen und Furanen adsorbieren, wenn Rauchgase aus Abfallverbrennungsanlagen durchgeleitet werden. Ein besonderer Vorteil ist, daß die Verfahren gemäß dem Stand der Technik in gleicher Weise mit körnigem Polyolefin durchgeführt werden können. Eine Änderung der Verfahrensführung ist deshalb nicht notwendig.

Das erfindungsgemäße Adsorptionsmittel kann, wie in der erstgenannten Veröffentlichung vorgeschlagen, am Ende der Abgasstrecke eingesetzt werden. Dies hat jedoch den Nachteil, daß alle Produktausgänge der vorgeschalteten Rauchgasreinigungskomponenten mit Dioxinen und Furanen kontaminiert werden. Die bekannten Adsorptionsmittel werden an dieser Stelle eingesetzt, um die Adsorption von Quecksilber, das zuvor abgeschieden wird, in den Adsorptionsmitteln zu verhindern. Die Eigenschaft von Festbetten aus Polyolefinen, Quecksilber nicht zu adsorbieren, eröffnet jedoch auch die Möglichkeit, solche Festbetten unmittelbar nach der Flugascheabscheidung anzuordnen. Hierbei wird die Quecksilberabscheidung in nachfolgenden Komponenten der Rauchgasreinigungsanlage nicht beeinträchtigt.

Ein wesentlicher Vorteil ist, daß sich Festbetten aus Polyolefinen regenerieren lassen. Die Regenerierung kann erfolgen, indem das Festbett von einem Gas, bevorzugt von Frischluft einer möglichst hohen Temperatur durchströmt wird. Hierbei werden die adsorbierten polyhalogenierten Verbindungen wieder desorbiert. Selbstverständlich darf das Polyolefin bei der Temperatur des Gases nicht erweichen oder schmelzen. Für die Temperatur des Gasstroms zur Desorption eignen sich bei Polyethylen Temperaturen zwischen 90 und 100 °C und bei Polypropylen Temperaturen zwischen 100 und 150 °C.

Die Einsatzmöglichkeiten und die mit den erfindungsgemäßen Adsorptionsmaterialien erzielten Ergebnisse werden im folgenden anhand von Figuren näher erläutert.

Es zeigen:
Fig. 1 - 3 eine erste, zweite und dritte Einsatzmöglichkeit des erfindungsgemäßen Adsorptionsmittels in der Rauchgasreinigung von Abfallverbrennungsanlagen und
Fig. 4 - 9 die erzielten Versuchsergebnisse zur Adsorption.
Fig. 10 und 11 die erzielten Versuchsergebnisse zur Desorption.

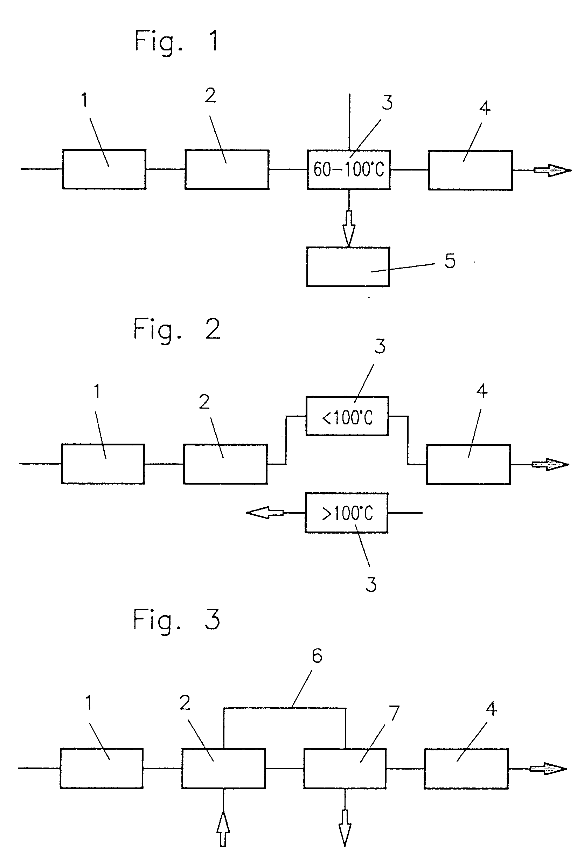

In Fig. 1 ist ein Verfahrensschema dargestellt, bei dem das Rohgas einer Abfallverbrennungsanlage durch einen Entstauber 1 und einen Kühler 2 geleitet wird. Anschließend strömt das Rauchgas in ein Festbett 3 aus einem Polyolefin und anschließend in die nasse Rauchgasreinigung 4, die insbesondere der Entfernung von HCl und SO₂ dient. Das Festbett 3 ist als Wanderbett ausgeführt und wird bei einer Temperatur von 60 bis 100° C betrieben; die mit den polyhalogenierten Verbindungen beladenen Teile des Wanderbetts werden dem Verbrennungsofen 5 zugeführt, wo das Polyolefin verbrannt wird und die adsorbierten polyhalogenierten Verbindungen zerstört werden.

In Fig. 2 ist ein weiteres Verfahrensschema dargestellt, bei dem zwei parallel geschaltete Feststoffbetten 3 aus Polyolefin vorgesehen sind. Von den parallel geschalteten Feststoffbetten 3 ist eines in Betrieb; es wird bei einer Temperatur von 60 bis 80° C gehalten. Das andere Festbett wird bei einer Temperatur von 100 bis 150 °C (Polypropylen) bzw. 90 bis 100 °C (Polyethylen) durch Verbrennungsluft 6 regeneriert. Die mit den desorbierten polyhalogenierten Verbindungen beladene Luft wird dem Verbrennungsofen zugeführt, wobei die Verbindungen zerstört werden. Die übrigen Bezugszeichen entsprechen denen der Fig. 1.

In Fig. 3 ist ein weiteres Verfahrensschema dargestellt. Das Rauchgas durchströmt nach dem Entstauber 1 einen Kühler 2 und tritt anschließend mit einer Temperatur von ca. 60 bis 100 °C in eine Diffusionsvorrichtung 7 ein. Diese Vorrichtung besteht im wesentlichen aus dünnwandigen Membranen aus einem Polyolefin mit großer Oberfläche. Aus Gründen der mechanischen Stabilität sind die Membranen vorzugsweise als Röhren oder Schläuche ausgebildet. In Kontakt mit den Membranen werden PCDD/F adsorbiert und diffundieren durch das dünnwandige Membranmaterial. Der im Kreuz- oder Gegenstrom geführte, auf die Temperatur des Rauchgases vorgewärmte Luftstrom 6 aus dem vorgeschalteten Kühler 2 nimmt durch Thermodesorption die durch die Membran diffundierten PCDD/F auf. Die mit PCDD/F beladene Luft wird als Verbrennungsluft bei der Verbrennung eingesetzt.

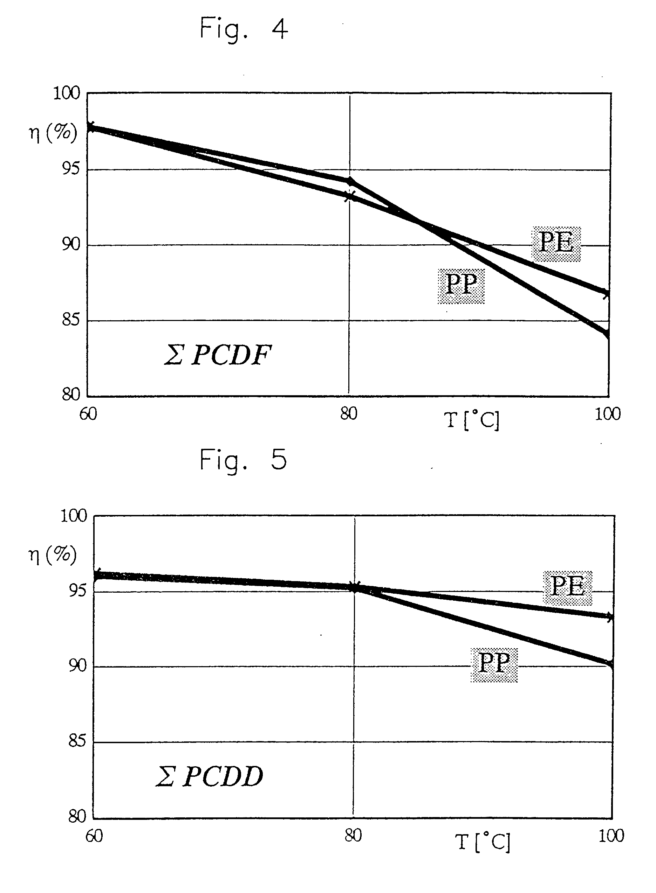

Die Erfindung wird im folgenden anhand von Durchführungsbeispielen und den Fig. 4 bis 9 näher erläutert.

### Beispiel 1

Es wurden zwei Festbetten aus Polyethylen (PE) und aus Polypropylen (PP) mit einer Bettiefe von 10 cm hergestellt. Das Adsorptionsmaterial PE bzw. PP lag in Form von Spänen vor, die durch mechanische Zerspanung hergestellt wurden. Die durchschnittliche Größe der Späne betrug ca. 10·10·1 mm. Beide Festbetten werden mit einer Anströmgeschwindigkeit von 0,1 m/s mit Rauchgas beaufschlagt. Das Rauchgas enthielt PCDD/F in einer Konzentration von 100 ng/Nm³ (Summenwert). Die Temperatur des Festbetts wurde zwischen 60 und 100 °C variiert. Fig. 4 zeigt den Wirkungsgrad [(Eingangskonzentration -Ausgangskonzentration)/Eingangskonzentration] der PCDF-Rückhaltung sowohl für das PE- als auch das PP-Festbett in Abhängigkeit von der Temperatur. In Fig. 5 ist der Wirkungsgrad der PCDD-Rückhaltung in Abhängigkeit von der Temperatur angegeben. Bei 60° C betrug der Wirkungsgrad jeweils über 95 %; er sank mit steigender Temperatur ab.

### Beispiel 2

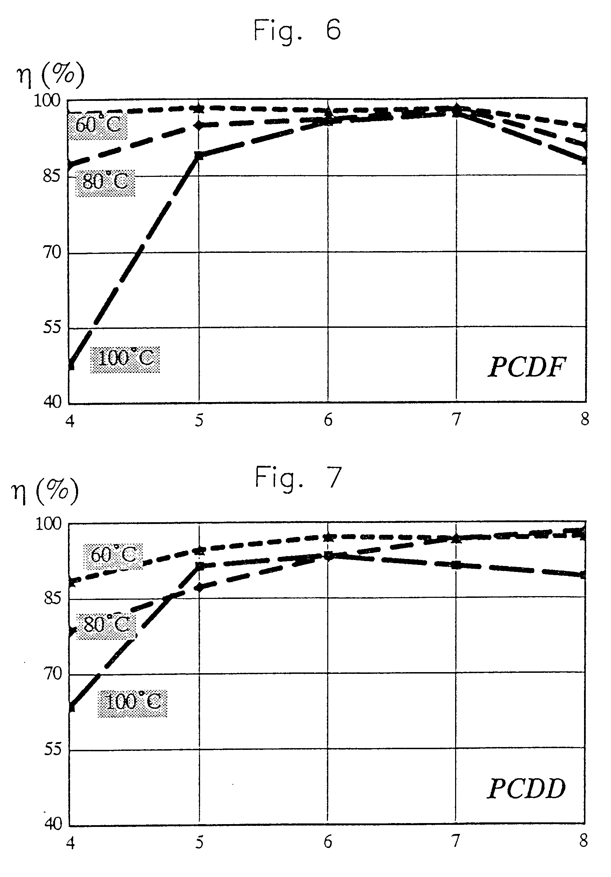

An dem in Beispiel 1 beschriebenen PP-Festbett wurde der Wirkungsgrad der PCDF-Rückhaltung (Fig. 6) und der PCDD-Rückhaltung (Fig. 7) bei drei verschiedenen Temperaturen in Abhängigkeit von der jeweiligen Anzahl von Chloratomen in diesen Verbindungen bestimmt.

### Beispiel 3

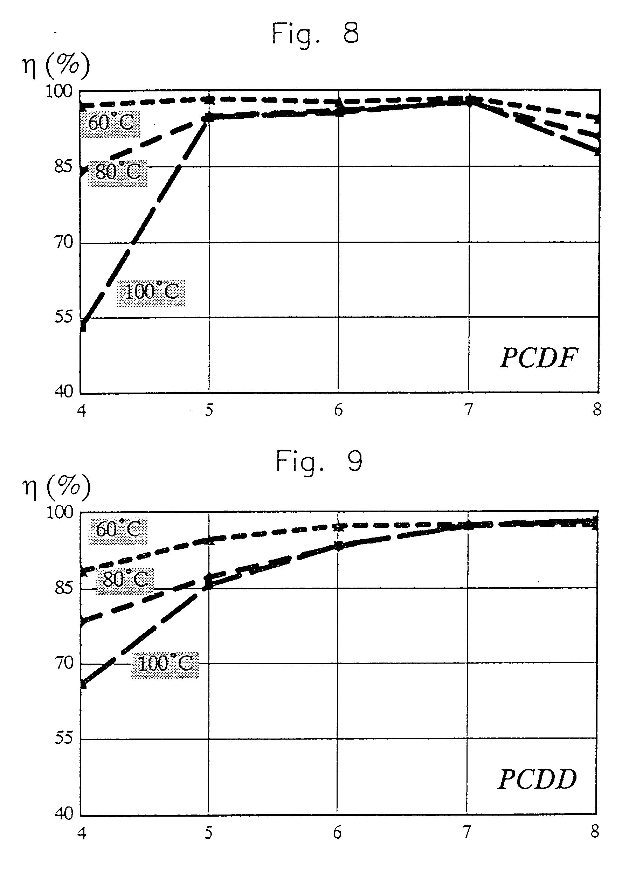

Beispiel 2 wurde mit einem PE-Festbett wiederholt. Die Ergebnisse sind in den Fig. 8 und 9 dargestellt.

### Beispiel 4

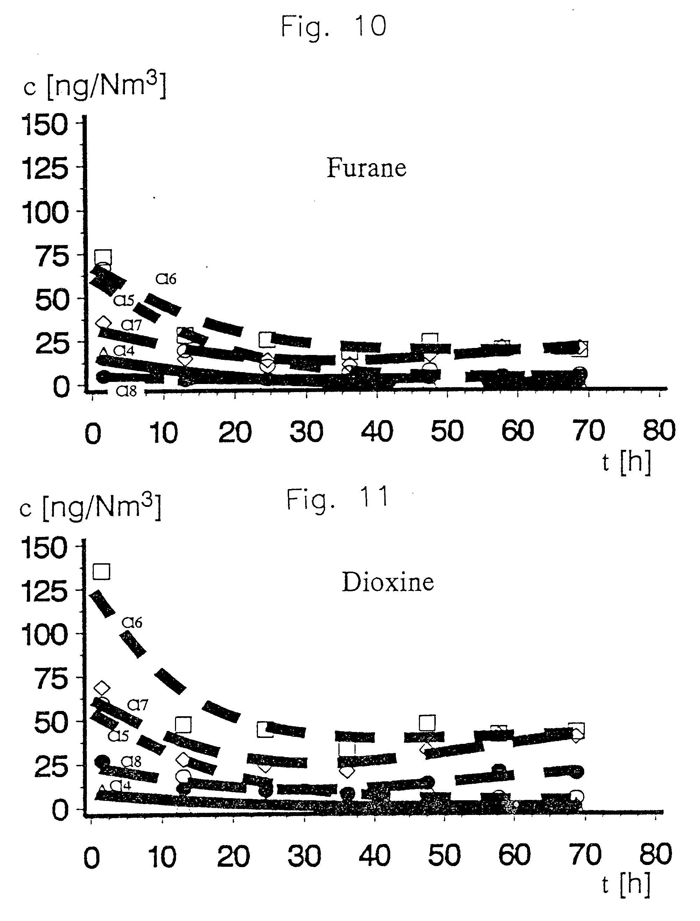

Mit Material aus Polyolefin, das in einer Abfallverbrennungsanlage lange Zeit (> 1 Jahr) mehrfach halogenierten Verbindungen ausgesetzt war und dementsprechend hohe Mengen der Verbindungen akkumuliert hat, wurden Desorptionsversuche durchgeführt. Zur Desorption wurde das Material bei 90 °C einem Luftstrom von 0,1 m/s ausgesetzt. Die Ergebnisse sind in Fig. 10 (für Furane) und 11 (für Dioxine) dargestellt. Die Konzentration c der Furane und Dioxine im Regenerationsgas ist gegen die Versuchszeit aufgetragen. Die Figuren demonstrieren die Regenerierbarkeit von beladenem Polyolefin.

## Patentansprüche

1. Verwendung eines Festbetts bestehend aus einem Polyolefin zur Rückhaltung von Polychlordibenzodioxinen (PCDD) und Polychlordibenzofuranen eines Rauchgases.

2. Verwendung nach Anspruch 1 mit Polyethylen oder Polypropylen als Polyolefin.

3. Verfahren zur Rückhaltung von Polychlordibenzodioxinen (PCDD) und Polychlordibenzofuranen (PCDF) aus dem Rauchgas einer Abfallverbrennungsanlage, bei dem
a) das Rauchgas von Flugasche befreit wird,
b) mit Hilfe eines Adsorptionsmittels mit einer großen spezifischen Oberfläche die PCDD und PCDF zurückgehalten werden, wodurch das Adsorptionsmittel mit PCDD und PCDF beladen wird,
dadurch gekennzeichnet, daß
c) das Adsorptionsmittel aus einem Polyolefin besteht,
d) die Temperatur des Adsorptionsmittels bei 40° bis 100° C gehalten wird.

4. Verfahren nach Anspruch 3, dadurch gekennzeichnet, daß das mit den Polychlordibenzodioxinen (PCDD) und Polychlordibenzofuranen beladene Adsorptionsmittel bei erhöhter Temperatur regeneriert wird.

## Claims

1. Use of a fixed bed, consisting of a polyolefin, for the retention of the polychlorodibenzodioxins (PCDD) and polychlorodibenzofurans of a flue gas.

2. Use according to claim 1 with polyethylene or polypropylene as polyolefin.

3. Process for the retention of polychlorodibenzodioxins (PCDD) and polychlorodibenzofurans (PCDF) from the flue gas of a waste incineration plant with
a) the complete removal of fly ashes from the flue gas,
b) PCDD and PCDF being retained by means of an adsorption agent with a large specific surface area, as a result of which the adsorption agent is loaded with PCDD and PCDF,
and which is characterized by
c) the adsorption agent consisting of a polyolefin,
d) the temperature of the adsorption agent being kept between 40° and 100°C.

4. Process according to claim 3, characterized by the adsorption agent loaded with polychlorodibenzodioxins (PCDD) and polychlorodibenzofurans being regenerated at increased temperature.

## Revendications

1. Utilisation d'un lit fixe consistant en une polyoléfine pour la rétention de polychlorodibenzodioxines (PCDD) et de polychlorodibenzofuranes d'un gaz de fumée.

2. Utilisation selon la revendication 1 avec du polyéthylène ou du polypropylène en tant que polyoléfine.

3. Procédé de rétention de polychlorodibenzodioxines (PCDD) et de polychlorodibenzofuranes (PCDF) à partir du gaz de fumée d'une installation de combustion de déchets dans lequel,
a) le gaz de fumée est débarrassé des cendres volantes,
b) on retient à l'aide d'un agent d'adsorption ayant une grande surface spécifique les PCDD et les PCDF, grâce à quoi les agents d'adsorption sont chargés avec PCDD et PCDF,
caractérisé en ce que
c) l'agent d'adsorption consiste en une polyoléfine,
d) la température de l'agent d'adsorption est maintenue de 40 à 100°C.

4. Procédé selon la revendication 3,
caractérisé en ce que
l'agent d'adsorption chargé de polychlorodibenzodioxines (PCDD) et de polychlorodibenzofuranes est régénéré à température accrue.
